# EUROPÄISCHE PATENTSCHRIFT

(11) **EP 1 832 847 B1**
(45) Veröffentlichungstag und Bekanntmachung des Hinweises auf die Patenterteilung: **02.06.2010**
(21) Anmeldenummer: 06004835.2
(22) Anmeldetag: 09.03.2006
(51) Int. Cl.: G01C 21/36

(54) **Navigationsgerät mit Telefonbuchspeicher**
Navigation device comprising telephone book memory
Appareil de navigation avec mémoire de répertoire téléphonique

(43) Veröffentlichungstag der Anmeldung: 12.09.2007
(73) Patentinhaber: telegate Media AG, 45145 Essen (DE)
(72) Erfinder: Polenske, Boris, 46282 Dorsten (DE); Vengels, Marcus, 46282 Dorsten (DE); Lawrence, Martin, 33602 Bielefeld (DE)
(74) Vertreter: Szynka, Dirk

(56) Entgegenhaltungen:
- EP-A- 1 128 163
- DE-A1- 10 339 115
- US-A1- 2003 231 163
- US-B1- 6 456 936
- TELETYPE: "TeleType GPS Help"[Online] 29. Januar 2003 (2003-01-29), XP002375565 Gefunden im Internet: URL:http://teletype.com/pages/support/Docu mentation/gps032003.pdf> [gefunden am 2006-07-20]

## Beschreibung

Die vorliegende Erfindung betrifft ein Navigationsgerät.

Navigationsgeräte, insbesondere mit GPS-Modulen zur satellitengestützten Navigation, sind seit vielen Jahren bekannt und in zunehmendem Einsatz. Zur Navigation wird eine Zielvorgabe eingegeben, woraufhin das Navigationsgerät eine Fahrt- oder Marschroute berechnet und unter fortlaufender eigener Positionsbestimmung die Fahrt oder den Marsch dorthin mit zum Ziel führenden Informationen begleitet.

Die Zielvorgabe erfolgt durch den Benutzer entweder sprachgesteuert oder durch Einzeibuchstabeneingabe über eine Tastatur oder einen beführungsempfindlichen Bildschirm.

Die DE 103 39 115 A1 offenbart als gattungsbildender Stand der Technik ein Navigations- und Telefonsystem mit einem integrierten Telefonbuchspelcher, in dem Telefonteilnehmer mit Name, Adresse und Telefonnummer gespeichert sind, und liegt damit dem Oberbegriff des Anspruchs 1 zugrunde.

Das Dokument Teletype: "TeleType GPS Help" (Online) 2003-01-29, im Internet gefunden am 20.07.2006, und die EP 1 128 163 A befassen sich ebenfalls mit der Navigation bzw. Routenplanung.

Der Erfindung liegt das technische Problem zugrunde, ein vor allem im Hinblick auf die Zieleingabe verbessertes Navigationsgerät anzugeben.

Hierzu ist ein Navigationsgerät mit einem integrierten Telefonbuchspeicher vorgesehen, in dem Telefonteilnehmer mit Name, Adresse und Telefonnummer als Teilnehmereinträge gespeichert sind, wobei Daten eines Teilnehmereintrags aus dem Telefonbuchspeicher durch einen Nutzer auswählbar und einer Navigationssoftware des Navigationsgeräts als Navigationsadressdaten zuführbar sind, wobei die Navigationssoftware dazu ausgelegt ist, die Adresse aus dem Teilnehmereintrag zur Navigation zu verwenden, **dadurch gekennzeichnet, dass** der Telefonbuchspeicher einerseits ein nach Teilnehmernamen gegliedertes Telefonbuch und andererseits ein nach Branchen gegliedertes Branchenbuch enthält.

Daneben richtet sich die Erfindung auch auf ein entsprechendes Navigationsverfahren.

Bevorzugte Ausgestaltungen sind in den abhängigen Ansprüchen angegeben.

Zur Klarstellung ist zunächst festzuhalten, dass der Begriff des Navigationsgeräts sich nicht ausschließlich auf Geräte mit einem Empfänger für Navigationssignale, etwa GPS-Signale oder Galileo-Signale, bezieht. Als Navigationsgerät wird hier auch ein Endgerät (Terminal) aufgefasst, das spezifisch zur Bedienung von Navigationsfunktionen ausgelegt ist, insbesondere eine dedizierte Software zur Navigation enthält, aber für den eigentlichen Navigationsbetrieb mit weiterer Hardware verknüpft werden muss, beispielsweise mit einem GPS-Empfänger. Das Navigationsgerät kann also beispielsweise auch ein Pocket PC mit einer geeigneten aufgespielten Software sein.

Die Grundidee der Erfindung liegt darin, das Navigationsgerät mit Telefonteilnehmerdaten auszustatten. Telefonteilnehmerdaten sind in vielfältiger Form bereits vorhanden und nutzbar, sei es in Form von auch elektronisch verfügbaren öffentlichen oder privaten Telefonverzeichnissen für Städte, das ganze Bundesgebiet und auch darüber hinaus, oder auch in Form von nutzerseitig erstellten Dateien, etwa untemehmensinternen Telefondateien, Kundenlisten, etc. In den allermeisten Fällen enthalten solche Dateien neben den Telefon- oder Faxnummern der erfassten Teilnehmer regelmäßig auch die Adressen. Es ist daher für den Benutzer arbeitssparend und erweitert die Einsatzmöglichkeiten eines Navigationsgeräts beträchtlich, wenn vorhandene Telefondateien genutzt werden können.

Die Verwendung von Telefondateien hat ferner den Vorteil einer besonders leichten Aktualisierbarkeit und auch Austauschbarkeit. Da Telefondateien kommerziell und auch unternehmensintern ohnehin geführt und gepflegt werden, sind sie mit geringem Aufwand beschaffbar bzw. aktualisierbar bzw. gegen andere Datenbestände austauschbar. Der eigenständige Aufbau einer Adressdatenliste aus bereits durch den Nutzer manuell oder über Spracheingabe eingegebenen Zielen ist demgegenüber sehr viel aufwändiger, notwendigerweise für neue Ziele nicht verfügbar und nach Ablauf einiger Zeit nicht mehr ausreichend aktuell.

Hierzu sieht das erfindungsgemäße Navigationsgerät einen Telefonbuchspeicher vor, der in das Gerät integriert ist und in dem Telefonteilnehmerdaten mit Namen, Adressen und Telefonnummern der einzelnen Teilnehmer gespeichert sind. Der Begriff des Telefonbuchspeichers umfasst hierbei auch Speicher, die im inhaltlichen Aufbau und der Gliederung nicht konventionellen Telefonbüchern entsprechen, etwa nach Branchen sortierten Branchenbüchern ähneln oder nach anderen Kriterien sortierte Kundendatenliste oder andere Kohtaktdatenlisten sind. Besonders bevorzugter Weise speichert der Telefonbuchspeicher einen kommerziell erhältlichen vollständigen Bestand der Telefonteilnehmer in einem bestimmten Gebiet, etwa dem deutschen Bundesgebiet.

Der Nutzer des Navigationsgeräts kann in an sich bekannter Weise einen bestimmten Teilnehmereintrag auswählen, woraufhin zumindest die Adressdaten dieses Eintrags einer Navigationssoftware des Geräts als Navigationsadressdaten zugeführt werden und für die Navigation verwendet werden.

Der Telefonbuchspeicher enthält, wie bereits eingangs erwähnt, die Telefonteilnehmerdaten auch in anderer Form sortiert aufbereitet als dies bei klassischen Telefonbüchern der Fall ist. Damit hat der Nutzer die Auswahl zwischen einer wie ein klassisches Telefonbuch sortierten Speichervariante und einer wie ein klassisches Branchenbuch sortierten Speichervariante, also im einen Fall nach Teilnehmernamen und im anderen Fall nach Branchen gegliedert. Zwischen den Alternativen kann durch entsprechende Menüauswahlschritte gewählt werden.

Eine bevorzugte Ausführungsform des erfindungsgemäßen Navigationsgeräts enthält ein Telefonmodul, ist also gleichzeitig ein Mobiltelefon, etwa nach dem GSM-Standard. Dabei soll das Telefonmodul auf denselben Telefonbuchspeicher zugreifen, so dass die Daten und der Speicherplatz doppelt genutzt werden können.

Alternativ oder zusätzlich dazu enthält eine weitere bevorzugte Ausführungsform ein E-Mail-Modul, kann also, wie von Mobiltelefonen an sich bereits bekannt, über Mobilfunkverbindungen E-Mails empfangen und versenden. Hierbei ist dann insbesondere vorgesehen, dass über E-Mails erhaltene Kontaktdaten, also insbesondere sog. elektronische Visitenkarten, der Navigationssoftware zuführbar und von dieser zur Navigation verwendbar sind. Der Nutzer kann sich also, sollte die Person, zu der er navigieren möchte, nicht im Telefonbuchspeicher enthalten sein oder er den Aufwand der Suche dort einsparen wollen, von dieser Person per E-Mail Adressdaten schicken lassen, die dann direkt in die Navigation oder über den Umweg eines neben dem bisher erwähnten Telefonbuchspeicher geführten weiteren Adressspeichers für die Navigation verwendet werden können. Ferner kann vorgesehen sein, dass Teilnehmereinträge aus dem Telefonbuchspeicher oder auch manuell oder über Spracheingabe eingegebene Adressdaten in eine Kontaktdatenliste des E-Mail-Moduls übernommen werden können. Schließlich kann vorgesehen sein, dass die über E-Mail erhaltenen Kontaktdaten für ein Telefonmodul, sofern vorhanden, genutzt werden und durch direkte Übernahme aus dem E-Mail-Modul angerufen werden können.

Bei dem integrierten Telefonbuchspeicher handelt es sich vorzugweise um einen Halbleiterspeicher. Im Prinzip kommen aber auch Festplatten in Betracht, wie sie in miniaturisierter Bauform beispielsweise von MP3-Abspielgeräten bekannt sind. Halbleiterspeicher haben demgegenüber Kostenvorteile und sind deutlich kleiner und unempfindlicher. Besonders bevorzugter Weise handelt es sich bei dem Halbleiterspeicher um eine einfach austauschbare Speicherkarte.

Bei einer besonders bevorzugten Ausgestaltung lässt das Navigationsgerät eine Einstellung zu, mit der eine oder eine Mehrzahl der in dem Branchenbuch aufgeführten Branchen ausgewählt werden können, um in Kartendarstellungen der Navigationssoftware auf dem Bildschirm angezeigt zu werden. Damit lassen sich die vorliegenden Informationen in besonders effektiver Weise verknüpfen und kann der Nutzer bestimmte Bedürfnisse während des Weges gewissermaßen am Wege liegend berücksichtigen. Beispielsweise kann er sich in die Navigationskartendarstellungen einblenden lassen, wo Apotheken zu finden sind, wenn er auf dem Weg zu seinem Navigationsziel noch einen Medikamenteneinkauf zu erledigen hat.

Ferner kann beim Suchen, etwa Rollen, in dem Telefonbuchspeicher (in welcher Sortierungsform auch immer) vorteilhafterweise vorgesehen sein, dass neben einer listenartigen Anzeige in einem ersten Bildschirmbereich zusätzlich ein zweiter Bildschirmbereich außerhalb der Listendarstellung vorgesehen ist, in dem ein bestimmter Listeneintrag an einer bestimmten Stelle des ersten Bildschirmbereichs mit deutlich größerem Textinhalt dargestellt ist. Beispielsweise kann sich die Liste auf Namen beschränken, um möglichst viele Listeneinträge auf dem Bildschirm anzeigen zu können, wobei etwa für den jeweils mittigen dargestellten Listeneintrag der vollständige vorhandene Text oder zumindest ein mehrzeiliger Teil in dem zweiten Bildschirmbereich angezeigt wird. So kann eine optimale Kombination aus einer übersichtlichen Listendarstellung einerseits und der Wiedergabe der vorhandenen Informationen oder eines wesentlichen Teils davon ohne unübersichtliche Hin- und Herschaltvorgänge gewährleistet werden.

Gemäß einem weiteren Aspekt der Erfindung ist das Navigationsgerät dazu ausgelegt, Adressenelementlisten mit Adressenelementen zur Auswahl auf dem Bildschirm anzuzeigen, wenn Informationen über eine Informationseingabeeinrichtung, etwa Buchstabenschaltflächen auf dem berührungsempfindlichen Bildschirm, eingegeben worden sind, die auf mehrere Adressenelemente passen, wobei das Navigationsgerät ferner dazu ausgelegt ist, die Adressenelementlisten nach der Größe der einzelnen Adressenelemente sortiert darzustellen.

Die Grundidee liegt hierbei darin, dass die relativ kleine Gerätegröße typischer Navigationsgeräte und die entsprechend kleinen Büdschirmformate nur eine sehr begrenzte Darstellung von Adressenelementlisten zulassen. Diese Listen enthalten mit den Adressenelementen die einzelnen Angaben, beispielsweise Ortschaften oder Straßen, aus denen sich die vollständige Navigationsadresse zusammensetzt. Dies führt in vielen Fällen dazu, dass der Nutzer relativ viele Bedienschritte durchführen muss, um das eigentlich gewünschte Adressenelement erreichen und auswählen zu können. Beispielsweise muss er die Liste entsprechend weit "rollen" oder mehrere einzelne Anfangsbuchstaben des Adressenelements angeben, bevor das eigentlich gewünschte Adressenelement erscheint. Tatsächlich ist aber die Wahrscheinlichkeit, dass relativ große Städte, Ortschaften oder Straßen annavigiert werden sollen, viel höher, als die entsprechende Wahrscheinlichkeit von kleinen Städten, Ortschaften oder Straßen. In einer Gesamtbetrachtung wird damit die Navigation bedienungsfreundlicher und deutlich schneller und effizienter, wenn es dem Nutzer möglich ist, eine größenabhängige Sortierung der Adressenelemente zu benutzen. Umgekehrt betrachtet kann man auch feststellen, dass sich damit bei gleich guter oder verbesserter Bedienbarkeit und vergleichbarem oder verbessertem Zeitaufwand letztlich kleiner Bildschirmformate und damit kleinere Gerätegrößen vertreten lassen.

In einer bevorzugten Ausgestaltung kann der Nutzer einstellen, nach welchem Kriterium sortiert werden soll. Sollte er tatsächlich einmal nach relativ kleinen Adressenelementen suchen und es vorziehen, beispielsweise mit einer Rollfunktion (Scroll-funktion) an die ihm bekannte alphabetische Stelle einer längeren Liste zu rollen, so kann er für solche Fälle auf die alphabetische Sortierung vertrauen.

In einer bevorzugten Ausführungsform der Erfindung ist zumindest vorgesehen, dass die Städte und Ortschaften größenabhängig sortiert dargestellt werden können. Dies ist wichtig, weil beispielsweise im Bundesgebiet oder auch in anderen Territorien zu bestimmten Anfangsbuchstabenkombinationen sehr zahlreiche Städte und Ortschaften existieren und in den allermeisten Fällen größere Städte angefahren werden sollen.

Bei einer weiteren bevorzugten Ausgestaltung ist vorgesehen, dass zumindest die Straßen innerhalb einer bestimmten Ortschaft oder Stadt alphabetisch sortiert dargestellt werden können. Auch dies ist wichtig, weil die Nutzer i. d. R. mit den Straßennamen weniger vertraut als mit den Stadt- und Ortsnamen sind und es ihnen deswegen schwerer fällt, in Straßennamenlisten lange nach dem richtigen Eintrag zu suchen. Straßennamen sind auch häufig länger und damit schwerer lesbar.

Ein besonderer Aspekt der Erfindung bezieht sich darauf, dass die Adressenelemente, insbesondere Städte, Ortschaften und/oder Straßen, in einer nach der Telefonteünehmerzahl und nicht Einwohnerzahl oder Straßenlänge bemessenen Größenreihenfolge sortiert dargestellt werden. Das Navigationsgerät kann dabei die Telefonteilnehmerzahl aus einem Telefonbuchspeicher ermitteln, auf den es extern, etwa über einen online verfügbaren Server, zugreifen kann. Besonders bevorzugter Weise ist der Telefonbuchspeicher jedoch in dem Gerät integriert und wird für an anderer Stelle ausgeführte Zwecke verwendet.

Weiterhin ist vorzugsweise ein bestimmter Bereich des Bildschirms für eine abweichende Darstellung des dort angeordneten Listeneintrags bzw. Adressenelements vorgesehen, etwa eine vergrößerte oder, besonders bevorzugter Weise, mehrzeilige Darstellung. So kann etwa immer das im Bildschirm mittige Adressenelement zwei- oder dreizeilig dargestellt sein, während die übrigen Listeneinträge lediglich einzeilig wiedergegeben werden. Der mittige Listeneintrag ist daher mit einem größeren Informationsinhalt ablesbar, etwa mit Kreisangaben zu Ortschaften oder Stadtteilangaben zu Straßen, ohne dass die damit prinzipiell zugängliche Informationsfülle aller Listeneinträge zu einer entsprechenden Aufblähung der Listendarstellung führen würde. Etwa durch Listenrollen lassen sich alle Listeneinträge in den entsprechenden Bildschirmbereich bringen.

Ferner kann beim Suchen, etwa Rollen, vorteilhafterweise vorgesehen sein, dass neben einer listenartigen Anzeige in einem ersten Bildschirmbereich zusätzlich ein zweiter Bildschirmbereich außerhalb der Listendarstellung vorgesehen ist, in dem ein bestimmter Listeneintrag an einer bestimmten Stelle des ersten Bildschirmbereichs mit deutlich größerem Textinhalt dargestellt ist. Beispielsweise kann sich die Liste auf Wegnamen beschränken, um möglichst viele Listeneinträge auf dem Bildschirm anzeigen zu können, wobei etwa für den jeweils mittigen dargestellten Listeneintrag der oder die wenigen vorhandenen Anwohner in dem zweiten Bildschirmbereich angezeigt werden. So kann eine optimale Kombination aus einer übersichtlichen Listendarstellung einerseits und der Wiedergabe der vorhandenen Informationen oder eines wesentlichen Teils davon ohne unübersichtliche Hin- und Herschaltvorgänge gewährleistet werden.

Vorzugsweise ist die Informationseingabeeinrichtung ein berührungsempfindlicher Bildschirm, der beispielsweise ein Buchstabenfeld zum Eintippen von Buchstaben vorsehen kann. Berührungsempfindliche Bildschirme haben sich wegen ihrer günstigen Kombination aus Flexibilität, Baugröße und Übersichtlichkeit im Bereich von Navigationsgeräten besonders bewährt.

Eine bevorzugte Ausgestaltung des erfindungsgemäßen Navigationsgeräts ist ausgelegt für eine Bildschirmanzeige mit einer Bedienfläche, welche Bedienfläche zwischen einem Anfang und einem Ende über eine Strecke langgestreckt verläuft, und dazu ausgelegt, dass durch eine entlang der Bedienfläche streichende Berührung ein Bedienparameter verstellt wird, wobei die Verstellung des Bedienparameters mit der Länge und der Richtung der Berührung korreliert und wobei die streichende Berührung bei ausreichender verbleibender Länge in der Bedienfläche an einem beliebigen Anfangspunkt in der Bedienfläche angesetzt werden kann.

Die Grundidee besteht hierbei in einem Bedienelement, das auf dem berührungsempfindlichen Bildschirm abgebildet ist und über streichende Berührung bedient wird. Man kann also einen Stift oder einen Finger an einer Stelle auf der Bedienfläche aufsetzen und unter Aufrechterhaltung der Berührung verschieben, wodurch sich die Bedienfunktion ergibt. Dazu ist die Bedienfläche langgestreckt, und zwar vorzugsweise gerade langgestreckt. Sie erstreckt sich also zwischen einem Anfang und einem Ende der Bedienfläche über eine Strecke, die deutlich länger ist als die dazu senkrechte Breite der Bedienfläche. Vorzugsweise erfolgt die Bedienung eindimensional, ist also eine Bewegung in der Breitenrichtung ohne Auswirkung auf die Bedienfunktion.

Die streichende Berührung verstellt einen Bedienparameter, wobei die Verstellung selbst mit Richtung und Länge der streichenden Berührung (streng monoton) korreliert. Der quantitative Umfang der Verstellung soll also mit der Länge der Berührung korrelieren, während die Richtung bzw. das Vorzeichen der Verstellung mit der Richtung der Bewegung korrelieren soll. Diese Korrelationen sind vorzugsweise linear, aber nicht notwendigerweise. Es sind auch Ausführungsformen denkbar, bei denen beispielsweise ein Mittenbereich der Bedienfläche hinsichtlich der Korrelation der Länge der Berührung und des quantitativen Umfangs der Parameterverstellung weniger empfindlich reagiert als die Randbereiche.

Ferner soll die Bedienbewegung in einem beliebigen Anfangspunkt in der Bedienfläche begonnen oder auch beendet werden können, solange die für die gewünschte Verstellung erforderliche Strecke in der Bedienfläche verbleibt. Es soll also nicht notwendig sein, den Stift oder Finger auf eine bestimmte Position zu setzen, bevor die Bedienung erfolgen kann. Zusammen mit der streichenden Bewegung lässt sich hierdurch eine besonders intuitive und einfache Bedienung realisieren, die keine präzise Platzierung des Fingers oder Stifts beim Beginn der Bedienbewegung erfordert und sich damit insbesondere unter den erschwerten Bedingungen in einem Fahrzeug oder während eines Fußmarsches leicht nutzen lässt.

Vorzugsweise ist die Bedienfläche, wie bereits festgestellt, gerade langgestreckt, wobei sie weiterhin vorzugsweise vertikal angeordnet und vorzugsweise an einem seitlichen Rand des Bildschirms positioniert ist. Sie kann beispielsweise den rechten Bildschirmrand einnehmen. Dadurch ist sie selbst bei begrenzter Erkennbarkeit des Bildschirminhalts, etwa wegen schlechter Sichtverhältnisse, für den Bediener ohne weiteres zu finden und stört bzw. begrenzt die nutzbare Bildschirmfläche in minimaler Weise.

Schließlich ist bevorzugt, dass das Maß der Verstellung des Bedienparameters ausschließlich mit Richtung und Länge der streichenden Berührung korrelieren. Zwar sind, etwa von Touch-Pads bei Notebooks oder konventionellen Computermäusen, auch Bedienkonzepte bekannt, bei denen beispielsweise die Geschwindigkeit mit berücksichtigt wird und das "Übersetzungsverhältnis" beispielsweise zwischen Mausbewegung und Cursorbewegung auf einem Bildschirm geschwindigkeitsabhängig ist. Solche Konzepte sind im vorliegenden Zusammenhang ebenfalls denkbar, wegen der von der Erfindung beabsichtigten Einfachheit und leichten und intuitiven Kontrollierbarkeit jedoch weniger bevorzugt.

In einer anschaulichen Darstellung lässt sich die erfindungsgemäße Bedienfläche jedenfalls bei einer geraden Form also mit einer senkrecht zur Drehachse gesehenen Draufsicht auf ein Bedienrad (oder Projektion eines Bedienrades) vergleichen, bei dem lediglich Ausmaß und Richtung der Drehbewegung ausschlaggebend sind, aber beispielsweise nicht, wo das Rad für die Drehbewegung angefasst wird. Die bevorzugte ausschließliche Zuordnung der Länge der streichenden Berührung zu der Parameterverstellung, unabhängig von der Lage der entsprechenden Strecke innerhalb der Bedienfläche, würde dabei übrigens nicht dem zunehmend tangentialen Blick auf das Rad in der Nähe der Ränder der Projektion und den sich daraus ergebenden Verschiebungen im Verhältnis von Strecken in der Projektion und tatsächlichen Strecken auf dem zweidimensionalen Umfang entsprechen. In diesem Sinn ist die Analogie zu dem Bedienrad begrenzt.

Bei einer weiteren bevorzugten Ausgestaltung erfolgt die Umsetzung der streichenden Berührung in die Parameterverstellung nicht im strengen Sinn kontinuierlich, sondern schrittweise, gewissermaßen "gerastert" oder "ratschend". Die erfindungsgemäße Bedienfläche eignet sich grundsätzlich gut für die Verstellung von eindimensional geordneten Bedienungsparametem, wofür im weiteren Verlauf noch Beispiele gegeben werden. In vielen Fällen ist es aber günstig, diese Bedienungsparameter in bestimmten Schrittweiten zu verstellen und keine Verstellungen unterhalb dieser Schrittweite zuzulassen.

Dabei kann die streichende Bewegung mit akustischen Signalen verknüpft sein, etwa einem leisen Klicken bei der Überschreitung jeder einzelnen Schrittschwelle. Doch unabhängig davon sind akustische Signale bevorzugt, etwa ein klingendes Geräusch beim Erreichen des Endes eines Verstellbereichs. Die akustische Begleitung erleichtert ebenfalls eine intuitive Bedienung bei u. U. eingeschränkten visuellen Kontrollmöglichkeiten und verstärkt den "mechanischen" und damit intuitiv anschaulichen Charakter der erfindungsgemäßen Bedienfläche.

Die Korrelation zwischen der Strecke der streichenden Berührung auf der Bedienfläche und der entsprechenden Parameterverstellung, also gewissermaßen das "Übersetzungsverhältnis", ist vorzugsweise verstellbar, um den individuellen Vorlieben des Nutzers oder der Verwendung der erfindungsgemäßen Bedienfläche für verschiedene Bedienfunktionen im Einzelnen Rechnung tragen zu können.

Die bereits erwähnten eindimensional geordneten Parameter können beispielsweise Lautstärkeverstellungen oder Zoomfunktionen in der Bildschirmdarstellung sein. Besonders bevorzugt ist die erfindungsgemäße Bedienfläche jedoch für die Verstellung des angezeigten Bereichs einer über den Bildschirminhalt hinausgehenden Liste oder die Verstellung einer Anzeigeposition einer Liste innerhalb des Bildschirms, auch wenn diese nicht über den Bildschirm hinausgeht. Solche Bedienfunktionen sind häufig mit dem Begriff "Rollen" ("Scrollen") bezeichnet worden und werden bei konventionellen Benutzeroberflächen auf Bildschirmen oft mit einem entlang einer schmalen langgestreckten Fläche verschiebbaren Rollbalken (auch Bildlaufleiste) bedient. Bevorzugt ist ferner, dass die erfindungsgemäße Bedienfläche bei verschiedenen Bildschirmaufteilungen oder Bildschirminhalten Verwendung findet, also in der Menüstruktur des Navigationsgeräts zu verschiedenen Untermenüs gehört und ein gleich bleibendes Element der Bedienung des Geräts darstellt.

Weiterhin ist vorzugsweise ein bestimmter Bereich des Bildschirms für eine abweichende Darstellung des dort angeordneten Listeneintrags vorgesehen, etwa eine vergrößerte oder, besonders bevorzugter Weise, mehrzeilige Darstellung. So kann etwa immer der im Bildschirm mittige Listeneintrag zwei- oder dreizeilig dargestellt sein, während die übrigen Listeneinträge lediglich einzeilig wiedergegeben werden. Der mittige Listeneintrag ist daher mit einem größeren Informationsinhalt ablesbar, ohne dass die damit prinzipiell zugängliche Informationsfülle aller Listeneinträge zu einer entsprechenden Aufblähung der Listendarstellung führen würde. Durch Bedienung über die beschriebene Bedienfläche lassen sich alle Listeneinträge in den entsprechenden Bildschirmbereich bringen.

Wenn das erfindungsgemäße Bedienfeld zur Bewegung innerhalb von Listen oder anderen Parameterdarstellungen verwendet wird, kann es häufig sinnvoll sein, insbesondere bei der Auswahl von inhaltlichen Listeneinträgen für eine weitere Verarbeitung, vor der Auswahl eine gesonderte Auswahloperation vorzusehen. Eine solche Auswahloperation wird gemeinhin gerne mit "Anklicken" bezeichnet. Vorzugsweise ist hierzu vorgesehen, den jeweils auswählbaren Listeninhalt oder auswählbaren Parameterwert, der sich über die erfindungsgemäße Bedienfläche verändern lässt, direkt mit einem Stift oder Finger anzutippen. Im Gegensatz dazu soll ein Antippen der erfindungsgemäßen Bedienfläche selbst keine Auswahlfunktion darstellen, um eine Trennung von kurzen Antippbewegungen vom Aufsetzen des Fingers oder Stiftes für beispielsweise eine Scroll-Funktion nicht zum Problem werden zu lassen. Hier wäre eine relativ präzise Bewegungsführung des Stiftes oder Fingers notwendig, die während der Navigation in Fahrzeugen oder zu Fuß problematisch sein kann.

Ein weiterer Aspekt der Erfindung sieht vor, dass das Navigationsgerät neben einem Navigationsdatenspeicher auch eine Datenfernübertragungseinrichtung aufweist und dazu ausgelegt ist, beim Verlassen eines den in dem Navigationsdatenspeicher gespeicherten Navigationsdaten entsprechenden geografischen Bereichs über die Datenfernübertragungseinrichtung Navigationsdaten zu einem anschließenden geografischen Bereich in den Navigationsdatenspeicher zu laden.

Die Grundidee liegt hierbei darin, bei Bedarf ergänzende Navigationsdaten zu weiteren geografischen Bereichen über Datenfernübertragung nachzuladen. Das erfindungsgemäße Navigationsgerät ist also dazu in der Lage, auch auf dem Weg zu einem Ziel außerhalb des von den abgespeicherten Navigationsdaten erfassten geografischen Bereichs eine Navigation zu diesem Ziel dadurch zu ermöglichen, dass fehlende Navigationsdaten nachbeschafft werden. Beispielsweise könnte das erfindungsgemäße Navigationsgerät vor einer Staatengrenze feststellen, dass zu der Wegstrecke hinter der Staatengrenze Navigationsdaten fehlen und dies dem Benutzer anzeigen. Der Benutzer kann dann ein Nachladen von Navigationsdaten über die Datenfernübertragung in die Wege leiten, ohne ein Geschäft aufsuchen zu müssen, sein Navigationsgerät an einen Computer anzuschließen oder dergleichen. Mit Datenfernübertragung ist hier eine kabellose Übertragung gemeint, also nicht etwa das Versenden von Daten über das Internet oder Festnetztelefonleitung. Die Erfindung zielt nämlich darauf ab, die Nutzer gerade vom Aufsuchen bestimmter "Nachladepunkte" unabhängig zu machen.

Die Navigation zu einem außerhalb von den abgespeicherten Navigationsdaten erfassten geografischen Bereichs liegenden Ziel kann durch das Navigationsgerät schon am Beginn des Weges begonnen werden, etwa indem rudimentäre Daten auch zu angrenzenden geografischen Bereichen vorhanden sind, etwa indem zu den in Frage kommenden Grenzübergängen abgespeichert ist, welche Städte hinter den Grenzübergängen sinnvollerweise über den jeweiligen Grenzübergang anzufahren sind. Es kann aber auch vorgesehen sein, dass der Nutzer zunächst ein Zwischenziel in dem von den Navigationsdaten erfassten geografischen Bereich vorgeben muss, etwa den Grenzübergang.

Ferner kann sich die Erfindung darauf beschränken, einen vergleichsweise geringen Datenbestand nachzuladen, beispielsweise nur einen Korridor, der die Strecke zu dem vorgegebenen Navigationsziel umfasst und noch einen gewissen Spielraum hat, also eine gewisse Korridorbreite, aber eben beispielsweise nicht das gesamte betroffene Staatsgebiet umfasst.

Es kann aber auch eine Ausführungsform günstig sein, bei der beim Verlassen eines die Navigationsdaten entsprechenden geografischen Bereichs ein relativ großer Datensatz, etwa die kompletten Navigationsdaten zu dem angrenzenden Staatsgebiet, nachgeladen werden.

Die Entscheidung zwischen diesen Möglichkeiten kann gebührentechnisch bedingt sein, beispielsweise kann es für den Nutzer kostengünstiger sein, in Ausnahmefällen nur einen Korridor nachzuladen statt die Kosten für ein komplettes weiteres Staatsgebiet oder einen in anderer Weise definierten größeren geografischen Raum zu übernehmen.

Ferner kann die Entscheidung zwischen diesen Möglichkeiten auch durch den technischen Aufwand für die Datenfernübertragung selbst und den noch zur Verfügung stehenden Speicherplatz in dem Navigationsdatenspeicher beeinflusst werden. Beispielsweise könnte als Datenfernübertragungseinrichtung ein GPRS-Modul in Frage kommen, wobei es sich als günstiger herausstellen könnte, die Datenmengen auf einen Korridor zu begrenzen. Andererseits könnte auch eine Mobiltelefonleitung mit relativ großen Übertragungsleistungen in Betracht kommen, insbesondere eine UMTS-Leitung. Dann könnnen auch große Datensätze übertragen werden. Die Verbindung zwischen der Datenfernübertragungstechnik und der übertragenen Datenmenge ist jedoch nicht zwingend.

Bevorzugt ist eine gewisse Selbsttätigkeit des erfindungsgemäßen Navigationsgeräts, indem dieses in einem bestimmten Schwellenabstand von dem Rand des geografischen Bereichs, zu dem Navigationsdaten vorliegen, auf das Erreichen des Randes aufmerksam wird. Es kann nun entweder, beispielsweise im Rahmen einer bereits getroffenen Absprache zwischen dem Nutzer und dem Provider der Navigationsdaten, selbsttätig die fehlenden Daten nachladen. Es kann aber auch einen Hinweis oder eine Anfrage an den Benutzer richten, dass ein Nachladevorgang initialisiert werden soll bzw. dass eine Freigabe für einen solchen erbeten wird. Der Nachladevorgang kann nämlich mit Kosten für den Nutzer verbunden sein oder auch mit Verlusten an anderen Daten, weil der Gesamtspeicherplatz begrenzt ist.

So kann es sinnvoll sein, für das Nachladen auch bereits von anderen Daten eingenommenen Speicherplatz zur Verfügung zu stellen und den Verlust solcher Daten in Kauf zu nehmen. Bevorzugt ist allerdings, die gespeicherten Navigationsdaten zu dem verlassenen Bereich zu erhalten, weil in den meisten Fällen eine Rückkehr in diesen Bereich recht wahrscheinlich ist.

Wie eingangs bereits erwähnt, ist ein erfindungsgemäßes Navigationsgerät nicht notwendigerweise mit Hardware für einen eigentlichen Navigationsbetrieb, insbesondere einem GPS-Empfänger, ausgestattet. Solche Ausführungsformen sind allerdings bevorzugt. Gleichermaßen bevorzugt sind fahrzeugunabhängige mobile Handgeräte, die sich sowohl in Fahrzeugen einbauen lassen, als auch unabhängig davon verwendet werden können. Besonders bevorzugter Weise handelt es sich dabei um für Kleidungsstücktaschen geeignete Geräte, also in der Baugröße von Pocket-PCS, Handheld-Computern, PDAs oder sogenannten Smart Phones.

Im Übrigen bezieht sich die Erfindung, wie eingangs bereits erwähnt, auch auf ein Verfahren zum Navigieren. Die vorstehende und die nachfolgende Beschreibung sind so zu verstehen, dass sie sich implizit auch auf ein jeweiliges Navigationsverfahren bzw. Verfahren zur Eingabe von Informationen in das Navigationsgerät bzw. Verfahren zum Auswählen von Listeneinträgen beziehen. Auf den Unterschied zwischen Verfahrenskategorie und Vorrichtungskategorie wird dabei nicht mehr explizit eingegangen.

Im Folgenden wird die Erfindung anhand eines Ausführungsbeispiels näher verdeutlicht. Dabei zeigt:
- Figur 1: eine perspektivische Ansicht eines erfindungsgemäßen Navigationsgeräts,
- Figuren 2 bis 15: Bildschirminhalte des Navigationsgeräts aus Figur 1 zu verschiedenen Funktionsabläufen,
- Figur 16: eine schematische Darstellung des Navigationsgeräts aus Figur 1 zur Erläuterung des Ladens von Navigationsdaten über Datenfernübertragung.

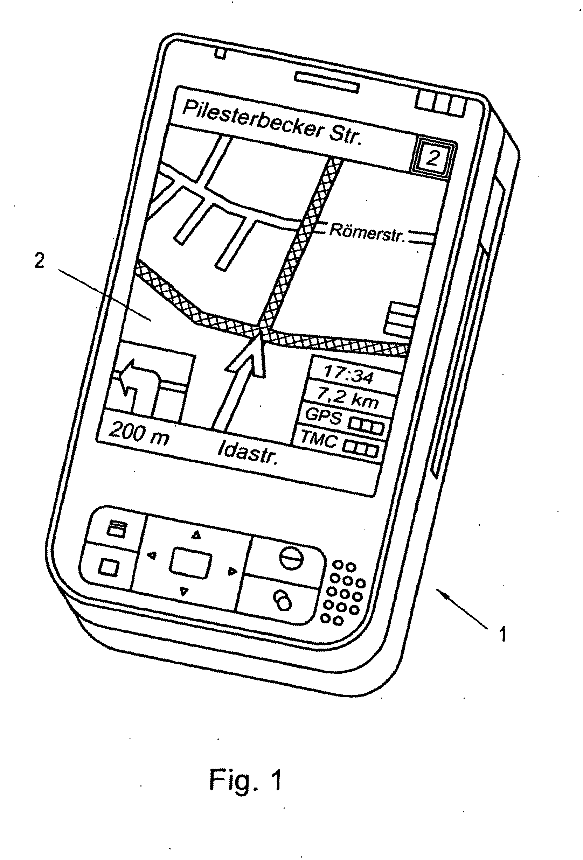

Figur 1 zeigt perspektivisch ein erfindungsgemäßes Navigationsgerät 1. Dabei handelt es sich um ein etwa handtellergroßes Datenverarbeitungsgerät mit einem etwa drei Viertel der Frontfläche des Geräts einnehmenden berührungsempfindlichen Bildschirm 2. Solche Geräte sind als PocketPC oder Handheld oder auch Personal Digital Assistant an sich bekannt.

Das Navigationsgerät 1 enthält einen Intel-kompatiblen Prozessor mit einer Taktfrequenz von über 300 MHz und 64 MB Hauptspeicher. Es enthält ferner ein GPS-Modul zur Kommunikation mit einem Satellitennavigationssystem in an sich bekannter Weise und ein GSM-Modul für die Mobiltelefonie. Ein nicht erkennbarer Steckplatz am oberen Rand des Navigationsgeräts 1 enthält eine an sich bekannte austauschbare SD-Speicherkarte. Auf dem Navigationsgerät 1 laufen neben einem Betriebssystem wie beispielsweise Windows Mobile 5.0 eine erfindungsgemäße Navigationssoftware, ein Telefonprogramm und ein E-Mailprogramm. Die SD-Karte dient u. a. als Navigationsdatenspeicher und enthält sogenannte Kartendaten, beispielsweise von Teleatlas NV, Version 3.2005. Die Hardwareausstattung solcher mobiler Datenverarbeitungsgeräte ist an sich bekannt und muss hier nicht im Einzelnen erläutert werden.

Die Bedienung erfolgt neben im unteren Bereich erkennbaren eigentlichen Tastern im Wesentlichen über den berührungsempfndlichen Bildschirm 2. Das Navigationsgerät 1 ist batteriebetrieben und eignet sich damit zur Verwendung auch für Fußgänger und in anderer Weise unabhängig von einem Fahrzeug, kann aber mit geeigneten Halterungen auch in einem Fahrzeug, insbesondere einem Pkw, angebracht und dort mit einer 12-V-Stromversorgung und gegebenenfalls auch externen Antennen verbunden werden.

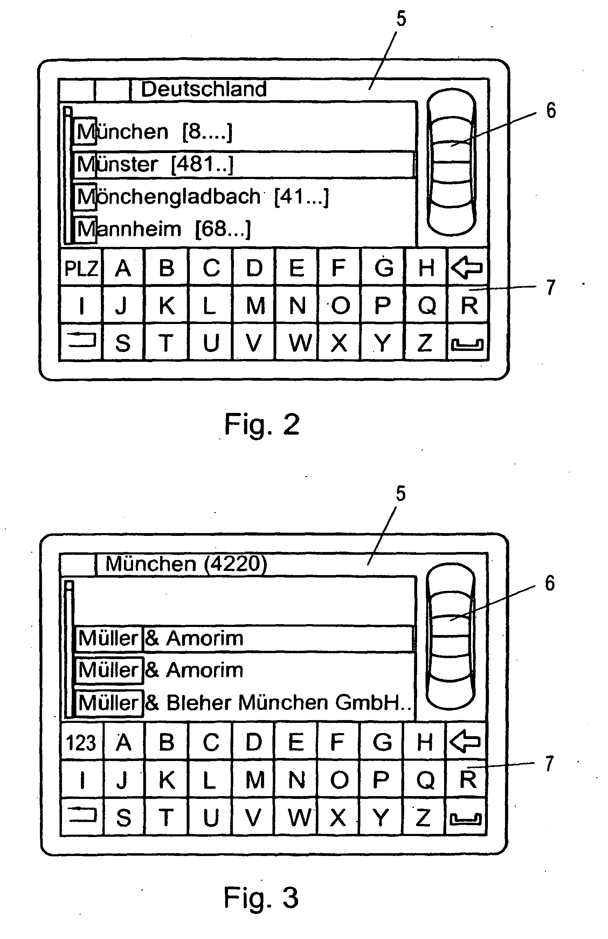

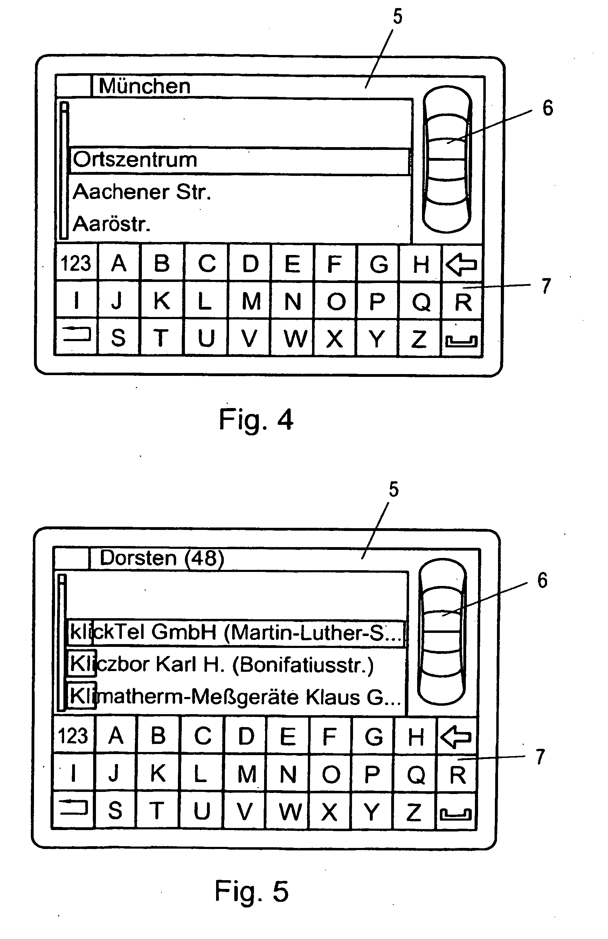

Die folgenden Figuren 2 bis 15 veranschaulichen die Funktion des Navigationsgeräts 1 aus Figur 1 durch Darstellungen der jeweiligen Anzeige auf dem Bildschirm 2, wobei das Gerät durch einfachen Tastendruck eine Auswahl zwischen Querformat und Längsformat erlaubt, um auf die Benutzervorlieben oder Montageposition angepasst zu werden. Die Figuren 1 bis 4 sind im Querformat erfasst, die folgenden Figuren 5 bis 8 im Längsformat und die verbleibenden Figuren wieder im Querformat.

Über eine vom Betriebssystem vorgegebene Eingangsseite wird die erfindungsgemäße Navigationssoftware aufgerufen und bietet über einen hier nicht dargestellten Eingangsbildschirm die Auswahl zwischen verschiedenen Menüoptionen, von denen im Folgenden einige beispielhaft dargestellt werden. Insbesondere kann die Option "Telefonbuch" ausgewählt werden und führt zu einer Figur 2 direkt ähnelnden Bildschirmanzeige mit einer im unteren Bereich eingeblendeten Eingabetastatur.

In diesem Beispielsfall soll ein Teilnehmer in München gesucht werden, weswegen der Buchstabe "M" eingegeben wird, woraufhin die in Figur 2 dargestellte Bildschirmanzeige erscheint. In einem oberen ersten Bildschirmbereich 5 erkennt man eine mit "München" und der in eckigen Klammern angegebenen Gesamtstruktur der für München vorkommenden Postleitzahlen beginnende Liste, die mit "Münster", "Mönchengladbach" und "Mannheim" sowie weiteren nicht dargestellten Städten fortgesetzt ist.

Daraus ergibt sich, dass die Städte hier nicht, wie gewöhnlich, alphabetisch aufgelistet sind, weil dann beispielsweise "Mannheim" vor "München" stehen müsste. Stattdessen sind sie nach ihrer Telefonteünehmerzahl sortiert. Die Telefonteilnehmerzahl hat die Navigationssoftware aus dem Datenbestand des in der SD-Karte ebenfalls realisierten Telefonbuchspeichers ermittelt, aus dem auch die angezeigte Städteliste stammt.

In diesem Fall hat der Nutzer ein im rechten oberen Bereich des Bildschirms dargestelltes Bedienfeld 6 benutzt, bei dem es sich um ein optisch einem Rad mit horizontal in der Bildschirmebene liegender Drehachse nachgebildetes Element handelt. Vertikal streichende Bewegungen über diese Bedienfläche 6 lassen die angezeigte Städteliste rollen, wobei mit jeder Zeilenstufe ein Klickgeräusch ertönt und beim Erreichen eines Listenendes ein kurzes Klingeln. In diesem Beispiel hat der Nutzer also einen Stift oder Finger auf die Bedienfläche 6 gesetzt und so lange streichend nach unten bewegt, bis ein Klicken zu hören war und die Liste um eine Stufe nach oben gesprungen ist. Damit steht nun "Münster" in der Mittelzeile des Bildschirmbereichs 5 und ist "Mannheim" mit in den Bildschirmbereich 5 gewandert, während "München" oberhalb der Mittelzeile steht. Wenn nun der Nutzer ausgehend von dem in Figur 2 dargestellten Zustand eine vertikale streichende Bewegung auf der Bedienfläche 6 nach oben durchführt, so ertönt ein Klingeln, weil das obere Listenende erreicht wird, springt "München" in die mittlere Listenzeile und verschwindet "Mannheim" am unteren Rand des Bildschirmbereichs 5. Der Benutzer kann "München" dann oder auch schon in dem in Figur 2 dargestellten Zustand durch direktes Antippen mit dem Stift oder Finger auswählen und damit für weitere Menüschritte verwenden.

Die Bedienfläche 6 funktioniert im Übrigen wie bereits eingangs beschrieben, wobei die vertikalen Bewegungen eines Stiftes oder Fingers auf der Oberfläche linear in Listenbewegungen übersetzt werden und bei diesem Ausführungsbeispiel die Bewegungsrichtung auf der Bedienfläche 6 genau entgegengesetzt zur Listenbewegung ist, der Stift also beispielsweise nach unten bewegt werden muss, um weiter unten liegende Listenbereiche einsehen zu können.

Die bereits erwähnte und unter dem ersten Bildschirmbereich 5 und dem Bedienfeld 6 angeordnete Bedienfläche 7 erlaubt im Übrigen auch die Eingabe weiterer Buchstaben, womit dann eine Liste von Städten mit den dann entsprechenden beiden oder mehr als zwei Anfangsbuchstaben angezeigt würde, die wiederum nach Größe, nämlich Telefonteilnehmerzahl, sortiert ist. Die rechte obere Taste der Bedienfläche 7 erlaubt ein Löschen des vorherigen Buchstabeneintrags, während die untere linke Taste um eine Bedienungsebene zurückspringen lässt. Die obere linke Taste mit dem Kürzel PLZ erlaubt die Städtesuche nach Postleitzahleingabe.

Die eben beschriebene Auswahl der Stadt München führt dann zu einer Anzeige wie in Figur 3, bei der alphabetische Teilnehmerlisten erscheinen. Bei der Anzeige aus Figur 3 ist also wieder bereits eine Buchstabeneingabe erfolgt, und zwar hier des vollständigen Namens "Müller". Es erscheinen in alphabetischer Reihenfolge die mit "Müller" beginnenden Teilnehmer in München.

Dass sich der Nutzer jetzt im Teilnehmerbestand Münchens bewegt, zeigt die oberste Zeile des Bildschirminhalts, die in der Bildschirmanzeige gemäß Figur 2 dargestellt hat, dass sich der Benutzer im deutschen Teilnehrnerstand bewegt. Die Software ist also grundsätzlich dafür ausgelegt, auch internationale Telefonbuchdaten zu verwalten.

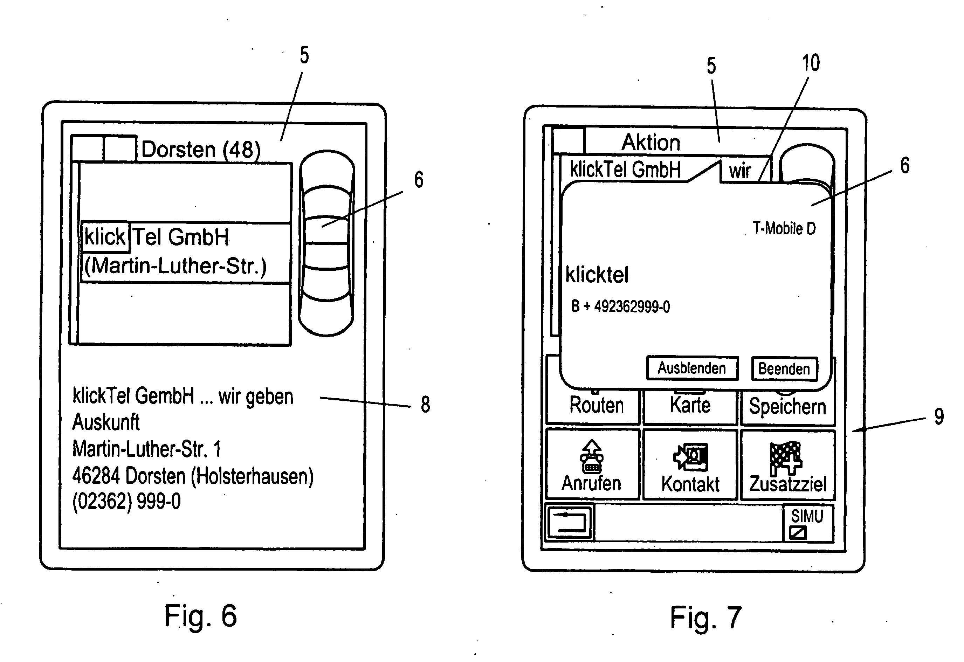

Wenn nun der Nutzer die Bedienfläche 6 weiter verwendet, so kann er innerhalb des Teilnehmerbestandes zum Anfang "Müller" "rollen" wie mit einem gewöhnlichen Rollbalken. Wie weiter unten anhand Figur 6 noch näher erläutert werden wird, wird dabei das Buchstabenfeld 7 ausgeblendet und stattdessen ein noch näher beschriebener zweiter Bildschirmbereich mit näheren Informationen zu dem jeweils in der mittleren Zeile des ersten Bildschirmbereichs 5 befindlichen Teilnehmer angezeigt.

Figur 4 zeigt keine Fortentwicklung der Bedienung gemäß den Figuren 2 und 3, sondern eine Alternative. Wenn der Nutzer statt der Option "Telefonbuch" die Option "Adressenliste" der Navigationssoftware ausgewählt hat, kann er in einer Weise, die der eben beschriebenen direkt entspricht, beispielsweise die Stadt München auswählen. Nun erscheint allerdings gemäß Figur 4 eine Straßenliste in dem ersten Bildschirmbereich 5. Bei diesem Beispiel ist die Straßenliste mit Ausnahme des ersten Listeneintrags "Ortszentrum" alphabetisch geordnet, beginnt also mit der "Aachener Straße" statt mit der größten Straße Münchens. Der Benutzer kann in den Grundeinstellungen der Software sowohl für die bereits beschriebene Städte- und Ortschaftenlistung gemäß Figur 2 als auch für die Straßenlistung gemäß Figur 4 zwischen einer teilnehmerzahlbezogenen und einer alphabetischen Reihenfolge wählen.

Die erfindungsgemäße Listung nach Teilnehmerzahl hat grundsätzlich den Vorteil, dass sie sich mit der erfindungsgemäßen Nutzung von Telefonbuchdaten besonders günstig kombinieren lässt. Gerade bei den Straßennamen kommt hinzu, dass die Telefonteilnehmerzahl gegenüber der Straßenlänge als das realistischere Kriterium erscheint. Die Wahrscheinlichkeit, dass eine Straße Navigationsziel ist, wird sehr viel eher mit der Telefonteilnehmerzahl korrelieren als mit ihrer Länge.

Wenn sich der Nutzer in der beschriebenen Weise durch Antippen auf dem Listeneintrag eine Straße ausgewählt hat, kann er in einer nicht mehr figürlich dargestellten Weise eine Hausnummer auswählen oder eine durch eine Schaltfläche in dem ersten Bildschirmbereich 5 gegebene Option "Kreuzung" auswählen. Diese Option erlaubt es ihm, aus einer nachfolgenden Liste der mit der ausgewählten Straße kreuzenden Straßen eine Kreuzung zwischen zwei ausgewählten Straßen zu bestimmen.

Insgesamt lassen sich in der beschriebenen Weise Teilnehmer aus dem Telefonbuchbestand und/oder Navigationsziele auswählen, die für weitere Funktionen verwendet werden können.

Figur 5 zeigt eine Bildschirmanzeige, die mit Figur 3 zu vergleichen ist, hier jedoch für die Stadt Dorsten statt München und für die Anfangsbuchstaben "Kli" statt "Müller". Als erster Eintrag ist die klickTel GmbH gelistet, die durch Antippen auswählbar ist.

Figur 6 zeigt eine sehr ähnliche Bildschirmanzeige, jedoch zur Veranschaulichung im Längsformat. Im Unterschied zur Figur 5 taucht wegen der zusätzlichen Eingabe von "ck" hier nur noch die "klickTel GmbH" auf und kann hier die erläuternde Anmerkung "Martin-Luther-Straße" nicht mehr in derselben Zeile angegeben werden, so dass eine hervorgehobene Darstellung des mittleren Eintrags in zweizeiliger Schreibweise in Erscheinung tritt. Diese zweizeilige Hervorhebung des jeweils mittleren Listeneintrags in dem ersten Bildschirmbereich 5 gilt grundsätzlich für alle Listen, wird aber nicht immer für die Darstellung des verfügbaren Textes benötigt.

Die erfindungsgemäße Software verfügt über eine weitere Möglichkeit der ausführlicheren Darstellung von Textinhalten, die in Figur 6 ebenfalls dargestellt ist. So lange der Finger oder Stift auf der Bedienfläche 6 verweilt, wird das Buchstabenfeld 7 ausgeblendet und stattdessen in dem entsprechenden zweiten Bildschirmbereich, der nunmehr mit 8 bezeichnet ist, eine vollständigere Textwiedergabe zu dem Eintrag der klickTel GmbH wiedergegeben, nämlich mit einem Werbespruch, der Postanschrift und der Telefonnummer. Eine entsprechende Möglichkeit zur ausführlicheren Textdarstellung bei ruhendem Berühren des Bedienfeldes 6 gibt es bei Anzeige des Buchstabenfeldes 7 grundsätzlich.

Durch Auswählen des Eintrags der klickTel GmbH ergibt sich der Bildschirminhalt gemäß Figur 7. Hier ist der Text aus dem zweiten Bildschirmbereich 8 aus Figur 6 in den ersten Bildschirmbereich gerutscht, wohingegen der zweite Bildschirmbereich von Schaltflächen eingenommen wird, die in Figur 7 summarisch mit 9 bezeichnet sind. Die Schaltflächen erlauben die Berechnung von Navigationsrouten (obere linke Schaltfläche "Routen"), die Anzeige von das ausgewählte Ziel enthaltenden Karten (obere mittlere Schaltfläche "Karte"), die Abspeicherung in einem Zwischenspeicher (oben rechts unter "Speichern"), einen Telefonanruf bei dem ausgewählten Teilnehmer (untere linke Schaltfläche "Anrufen"), ein Hinzufügen zu einer Kontaktliste, die beispielsweise auch für E-Mail-Funktionen benutzt werden kann (untere mittlere Schaltfläche "Kontakt"), und schließlich die Verwendung als Zusatzziel zur Navigation (unten rechts).

Bei dem vorliegenden Beispiel hat der Benutzer die Schaltfläche "Anrufen" angetippt, woraufhin das in Figur 7 weitgehend den ersten Bildschirmbereich oben überlagernde Fenster 10 eingeblendet wird. In der obersten Zeile dieses Fensters 10 stehen der Texthinweis "Telefon-Wählen...", etwas weiter unten rechts der Telefondiensteanbieter "T-Mobile D" und noch etwas weiter unten links Name und Telefonnummer des angerufenen Teilnehmers. Dieses Fenster 10 lässt sich, wie die linke der beiden unteren Schaltflächen in dem Fenster 10 zeigt, ausblenden. Mit der rechten der beiden unteren Schaltflächen kann der Anrufvorgang oder das Gespräch beendet werden. In dem in Figur 7 dargestellten Betriebszustand funktioniert das erfindungsgemäße Navigationsgerät wie ein Mobiltelefon.

In ganz entsprechender Weise kann man einen ausgewählten Teilnehmer auch in ein Emailprogramm übernehmen und auch über ein Emailprogramm erhaltene Kontaktdaten ("elektronische Visitenkarten" oder "Signaturen") für Navigationszwecke oder Telefonzwecke verwenden.

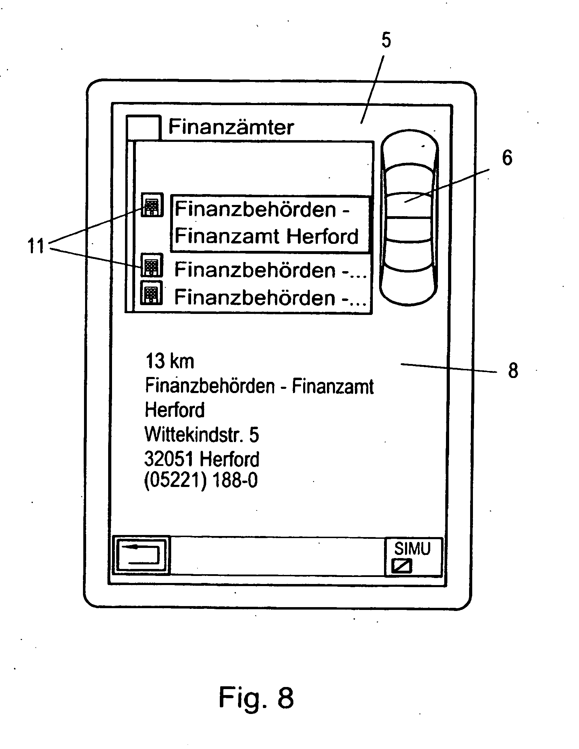

Figur 8 zeigt eine weitere Nutzungsmöglichkeit der erfindungsgemäßen Navigationssoftware. Hier hat der Nutzer statt der bisher beschriebenen Menüs "Telefonbuch" und "Adressenliste" ein Menü "Branchenbuch" gewählt. Der entsprechende Datenbestand ist statt nach Teilnehmernamen nach Branchen, im in Figur 8 dargestellten Beispiel beispielsweise der Branchenbezeichnung "Finanzämter", gegliedert. Die Brancheneinträge werden nach entsprechenden Branchensammelbegriffen angezeigt, nachdem die jeweilige Stadt oder Ortschaft ausgewählt worden ist, wie bereits zuvor beschrieben. Man erkennt auch, dass den Einträgen grafische Symbole 11, hier für "Ämter und Behörden", in piktogrammähnlicher Form zugeordnet sind. Auf diese Symbole wird später noch einmal eingegangen. Im Übrigen entspricht die Bedienung des Menüs "Branchenbuch" den vorherigen Beschreibungen zu dem Menü "Telefonbuch".

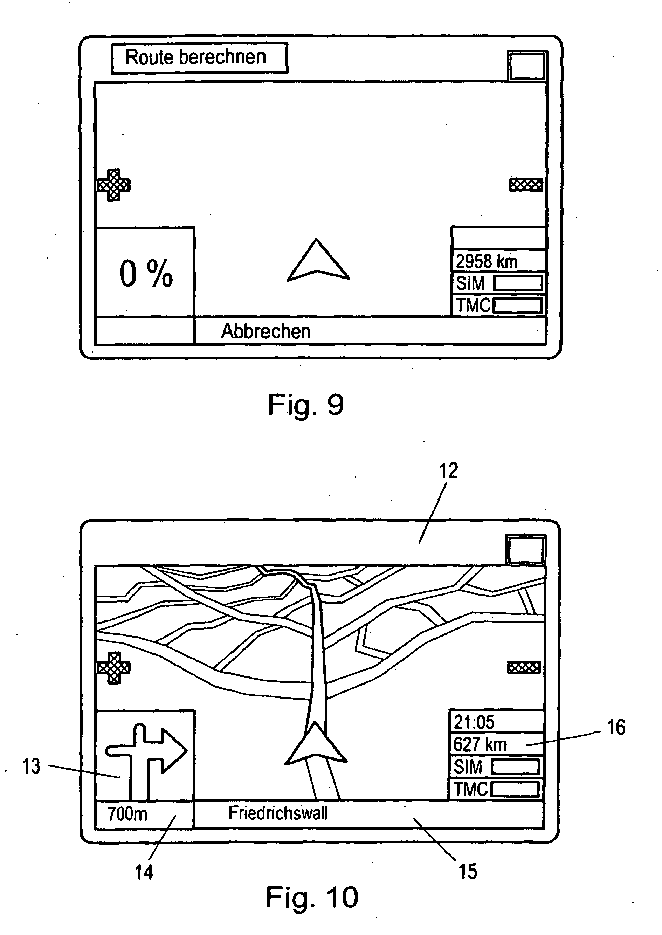

Wenn der Nutzer einen Teilnehmer aus dem Telefonbuch oder dem Branchenbuch ausgewählt hat, erscheint eine Bildschirmanzeige gemäß Figur 7. Diese Bildschirmanzeige erlaubt beispielsweise auch die Auswahl über die Schaltfläche "Routen", woraufhin die Navigationssoftware gestartet wird. Zunächst erscheint ein Bildschirminhalt wie in Figur 9, der angibt, dass die Navigationssoftware mit der Routenberechnung beschäftigt ist. Während dieser Routine bestimmt sie die eigene Position mit Hilfe des bereits erwähnten GPS-Moduls und bestimmt in an sich bekannter Weise eine günstige Streckenführung von dieser Position zu dem eingegebenen Ziel, wobei verschiedene Optionen für die Streckenführung möglich sind, etwa minimale Strecke, minimale Zeit, minimale Kreuzungszahl, etc. Während dieser Routine zeigt das untere linke Feld in Figur 9 den Fortschritt durch von 0 - 100 % hoch laufende Prozentwerteangaben an.

Kommt die Routine zu ihrem Abschluss, erscheint ein Bildschirminhalt wie in Figur 10. Hier kann in einer oberen Zeile 12 das hier nicht festgelegte Navigationsziel angezeigt werden. Der größte Teil des Bildschirms zeigt eine hier perspektivisch erscheinende Kartendarstellung, die wahlweise auch in direkter Draufsicht erscheinen kann und dann Straßennamen enthält. In dieser Kartendarstellung ist der voraus liegende Weg zum Ziel farbig markiert.

Die links und rechts am Rand jeweils mittig eingezeichneten Symbole + und - lassen durch jeweiliges Antippen eine Zoomvergrößerung oder -verkleinerung der Kartendarstellung zu.

Die rechte obere Schaltfläche am rechten Rand der Zeile 12 lässt beim Antippen eine Menüzeile erscheinen, mit der das Navigationsmenü beendet werden kann, der Ton abgeschaltet werden kann, zwischen einer Tag- und Nachtdarstellung des Bildschirminhalts ausgewählt werden kann und schließlich zwischen der dargestellten perspektivischen Ansicht und der erwähnten Draufsicht ausgewählt werden kann.

Der linke untere Bereich zeigt eine verkehrschildähnliche Richtungsangabe 13 und darunter eine Streckenangabe 14. Rechts von der Streckenangabe 14 findet sich einen Zeile 15 mit einer Straßenangabe. Mit der Streckenangabe 14 wird dargestellt, in welcher Entfernung das nächste Manöver auftritt, hier in 700 m. Mit der Richtungsangabe 13 wird zum einen dargestellt, dass der Fahrer dort rechts abbiegen soll, zum anderen dass die entsprechende Kreuzung außerdem noch die Möglichkeit zum Linksabbiegen und zum Geradeausweiterfahren bietet. Diese Informationen ergeben sich aus dem eingezeichneten nach rechts abknickenden Pfeil und den beiden geradeaus und nach links weisenden in der Dicke verkleinerten "Stummeln". Die Zeile 15 zeigt an, dass die Straße, in die dieses Manöver führt, "Friedrichswall" heißt.

Im rechten unteren Bereich werden in einem Feld 16 (von oben nach unten) die aktuelle Uhrzeit, die verbleibende Strecke bis zum Ziel sowie zwei technische Statusanzeigen SIM und TMC angezeigt. Die Statusanzeige SIM bedeutet hier zunächst nur, dass die Figuren Bildschirmausdrucken aus einer Simulation entsprechen. Bei einer realen Navigation stünde hier GPS und würde durch die Balkenanzeige die Stärke des GPS-Signals angezeigt. Analog dazu wird unter TMC die Stärke des TMC-Signals angezeigt, nämlich eines entweder über ein externes Modul oder ein in dem erfindungsgemäßen Navigationsgerät integriertes Modul empfangenen Verkehrsmeldungssignals auf Radiofrequenzen. Ein Antippen dieser Statusanzeigen lässt einen Bildschirminhalt erscheinen, der über den jeweiligen technischen Status in weiteren Einzelheiten informiert.

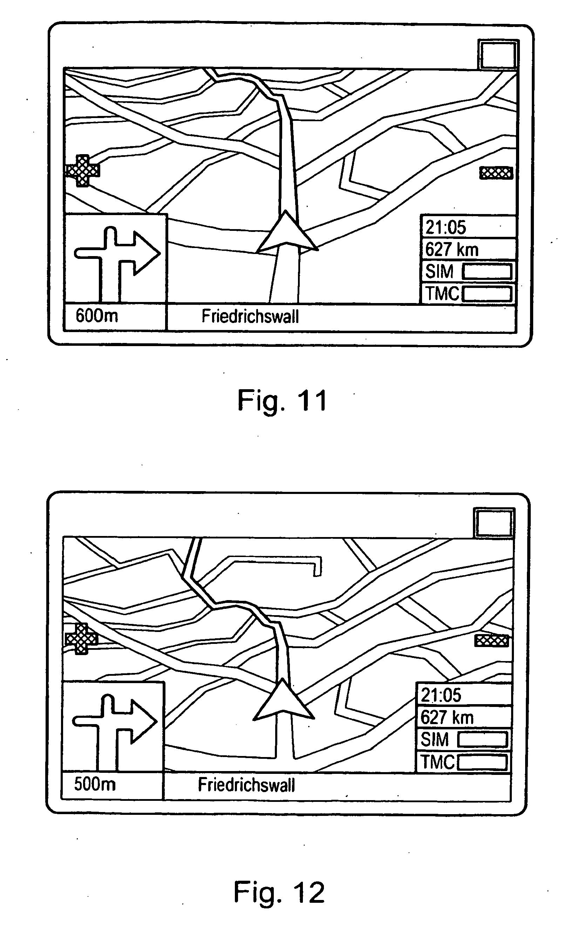

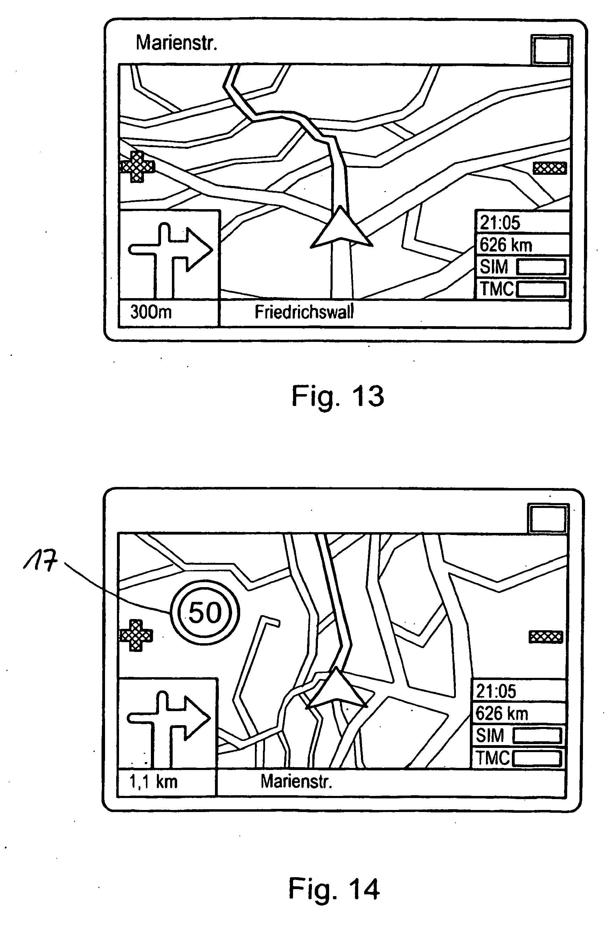

Die folgenden Figuren 11 - 13 verfolgen den Bildschirminhalt über etwa einen Kilometer und unterscheiden sich neben der von Figur 12 auf Figur 13 von 627 km auf 626 km springenden Anzeige der verbleibenden Strecke nur durch die jeweilige Kartendarstellung.

Figur 14 zeigt einen Bildschirminhalt aus einer anderen Navigation, auf die in Zusammenhang mit dem dort eingeblendeten Feld 17 eingegangen werden soll. Hier handelt es sich um eine Einblendung einer Tempolimitanzeige in die Kartendarstellung, die die Navigationssoftware aus den vorhandenen Kartendaten erhält. Diese Information kann weiterhin verknüpft werden mit der von der Navigationssoftware ohnehin erfassten Fahrzeuggeschwindigkeit und mit durch den Benutzer einstellbaren Schwellenwerten zu einer Warnanzeige bei Überschreitung des Tempolimits führen. Beim Aufscheinen einer neuen Warnanzeige kann zusätzlich eine Sprachausgabe, etwa das Wort "Achtung", erfolgen.

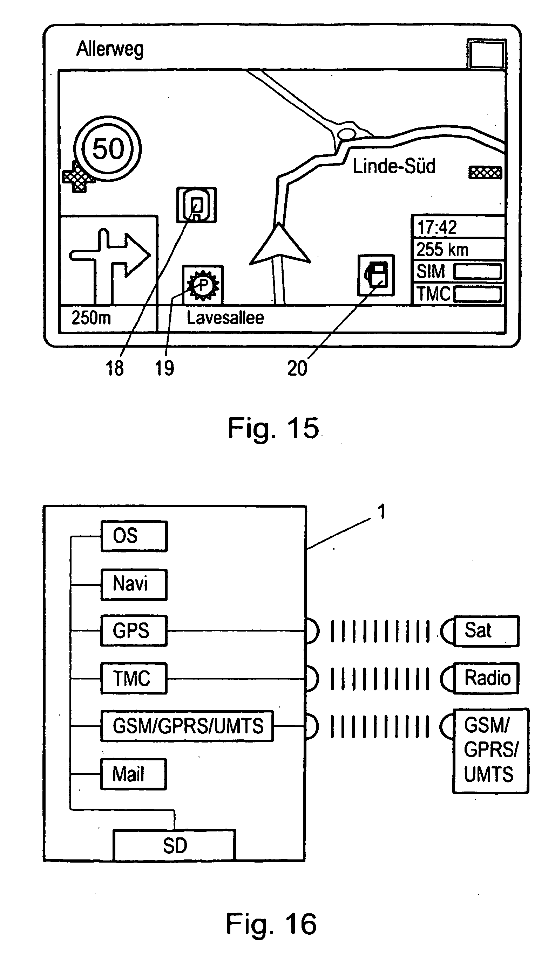

Figur 15 zeigt wiederum eine Bildschirmanzeige aus einer anderen Navigation, die wegen der eingeblendeten Symbole 18-20 dargestellt wird. Die Darstellung ist im Übrigen ein Beispiel für die bereits erwähnte Draufsicht statt der perspektivischen Ansicht.

Das Symbol 18 soll ein Sportstadion darstellen und symbolisiert den Gliederungsbegriff "Sportstätten" aus dem Branchenbuch. Dementsprechend symbolisiert der mit einem "P" versehene Stern 19 eine Polizeistation und das Zapfsäulensymbol 20 eine Tankstelle. Der Benutzer kann die Einblendung solcher Branchensymbole in den Kartendarstellungen wählen, so dass er je nach Interesse während der Navigation zusätzliche Informationen über am Wege liegende Einrichtungen erhält.

Figur 16 zeigt eine schematische Darstellung des Navigationsgeräts 1 auf der linken Seite in Verbindung mit drei systemverschiedenen Sendern auf der rechten Seite. Die Darstellung verdeutlicht, dass das Navigationsgerät 1 (von oben nach unten) mit einer Betriebssystemsoftware OS, einer Navigationssoftware, einem GPS-Modul mit zugehöriger Antenne, einem TMC-Modul (das auch extern, beispielsweise im Autoradio, angeordnet sein kann) mit zugehöriger Antenne, mit einem GSM/GPRS (Mobiltelefon)-Modul (oder auch UMTS-Modul) mit zugehöriger Antenne und schließlich mit einer E-Mailsoftware ausgestattet ist. Alle Softwareteile kooperieren mit dem Betriebssystem OS. In an sich bekannter Weise nutzt die Navigationssoftware das GPS-Modul zur Standortbestimmung. Dazu empfängt das GPS-Modul von einem Satelliten (SAT) entsprechende Signale.

Das TMC-Modul empfängt Verkehrsmitteilungen über Radiofrequenzen, die von den für Verkehrsfunk zuständigen Radiosendern abgestrahlt werden. Die Navigationssoftware kann entsprechende Hinweise, beispielsweise Stauwamungen, berücksichtigen und in die Routenempfehlungen einarbeiten, wie an sich bekannt.

Das GSM/GPRS-Modul lässt das Navigationsgerät 1 auch als Mobiltelefon funktionieren. Es hat bei der vorliegenden Erfindung noch weitere Aufgaben, auf die im Folgenden näher eingegangen wird.

Die Mailsoftware erlaubt E-Mailkontakte über das GSM/GPRS-Modul und in der bereits erwähnten Weise die Verwendung von elektronischen Visitenkarten und Signaturen in der Navigationssoftware.

Die Navigationssoftware greift auf den Navigationsdatenspeicher in der im unteren Bereich eingezeichneten steckbaren und austauschbaren SD-Speicherkarte zu. Neben diesen sogenannten Karteninfomationen enthält die SD-Speicherkarte ferner den Telefonbuchdatenspeicher für die erwähnten Menüs "Telefonbuch" und "Branchenbuch" sowie auch Speicherplatz für vom Nutzer selbst zu erstellende Adresslisten. In letzteren können auch Telefon- und E-Mailkontakte abgespeichert werden.

Selbstverständlich hat das Navigationsgerät 1 über das GSM-Modul auch die Möglichkeit zum Internetzugang und kann sich Daten aus dem Internet laden.

Die Datenfernübertragungseinrichtung, mit der erfindungsgemäß Navigationsdaten (Kartendaten) zu weiteren geografischen Bereichen geladen werden sollen, ist in dem GSM/GPRS-Modul verkörpert. Dieses Modul kann nach dem GPRS-Standard definierte Datenpakete empfangen. Über diesen Kanal ist das Nachladen von korridorbezogenen Kartendaten in den Navigationsdatenspeicher der SD-Speicherkarte möglich.

Bei UMTS-tauglichen Geräten kann statt des GSM/GPRS-Moduls ein UMTS-Modul vorhanden sein, das dann auch die Funktion der Datenfernübertragungseinrichtung einnimmt. In beiden Fällen stehen die Module in Funkkontakt mit entsprechenden GSM-/GPRS-/UMTS-Sendem.

So ist das erfindungsgemäße Navigationsgerät in der Lage, sich in einfacher Weise und ohne wesentlichen technischen Zusatzaufwand über einen GPRS- oder UMTS- oder anderweitigen Datenfemübertragungsserver Navigationsdaten zu laden, wenn der Bedarf auftritt, insbesondere bei der Annäherung an den Rand eines durch die vorhandenen Navigationsdaten abgedeckten Bereichs.

## Patentansprüche

1. Navigationsgerät mit einem integrierten Telefonbuchspeicher,
in dem Telefonteilnehmer mit Name, Adresse und Telefonnummer als Teilnehmereinträge gespeichert sind,
wobei Daten eines Teilnehmereintrags aus dem Telefonbuchspeicher durch einen Nutzer auswählbar und einer Navigationssoftware des Navigationsgeräts als Navigationsadressdaten zuführbar sind, und die Navigationssoftware dazu ausgelegt ist, die Adresse aus dem Teilnehmereintrag zur Navigation zu verwenden,
**dadurch gekennzeichnet, dass** der Telefonbuchspeicher einerseits ein nach Teilnehmernamen gegliedertes Telefonbuch und andererseits ein nach Branchen gegliedertes Branchenbuch enthält.

2. Navigationsgerät nach Anspruch 1, das ein Telefonmodul enthält, wobei Teilnehmereinträge aus dem Telefonbuchspeicher zur Zuführung zu dem Telefonmodul und Telefonanwahl auswählbar sind.

3. Navigationsgerät nach Anspruch 1 oder 2, das ein E.Mail-Modul enthält, wobei über das E-Mail-Modul empfangene Kontaktdaten mit Adressen der Navigationssoftware zuführbar und durch die Navigationssoftware zur Navigation verwendbar sind.

4. Navigationsgerät nach Anspruch 2 und 3, bei dem über das E-Mail-Modul empfangene Kontaktdaten mit Telefonnummern dem Telefonmodul zuführbar und zur Telefonanwahl verwendbar sind.

5. Navigationsgerät nach einem der vorstehenden Ansprüche, bei dem der Telefonbuchspeicher in einem Halbleiterspeicher implementiert ist.

6. Navigationsgerät nach Anspruch 5, bei dem der Halbleiterspeicher eine austauschbare Speicherkarte ist.

7. Navigationsgerät nach einem der vorstehenden Ansprüche, bei dem Branchenbucheinträge branchenabhärigig auf Kartendarstellungen der Navigationssoftware darstellbar sind.

8. Navigationsgerät nach einem der vorstehenden Ansprüche, bei dem beim Suchen in Teilnehmereinträgen des Telefonbuchspeichers die Teilnehmereinträge in einem ersten Bildschirmbereich als Liste dargestellt und gerollt werden können und ein in einem bestimmten Teil des ersten Bildschirmbereichs jeweils angeordneter Teilnehmereintrag in einem zweiten Bildschirmbereich außerhalb der Listendarstellung in größerem Textumfang dargestellt wird.

9. Navigationsgerät nach einem der vorstehenden Ansprüche, das als fahrzeugunabhängiges mobiles Handgerät ausgebildet ist.

10. Navigationsgerät nach einem der vorstehenden Ansprüche mit einer Einrichtung zur Eingabe von Informationen und einem Bildschirm, welches Navigationsgerät dazu aufgelegt ist, Adressenelementlisten mit Adressenelementen zur Auswahl auf dem Bildschirm anzuzeigen, wenn Informationen über die Informationseingabeeinrichtung eingegeben worden sind, die auf mehrere Adressenelemente passen, wobei das Navigationsgerät ferner dazu ausgelegt ist, die Adressenelementlisten nach der Größe der einzelnen Adressenelemente sortiert darzustellen.

11. Navigationsgerät nach einem der vorstehenden Ansprüche mit einem berührungsernpfindlichen Bildschirm, welches Navigationsgerät ausgelegt ist für eine Bildschirmanzeige mit einer Bedienfläche, welche Bedienfläche zwischen einem Anfang und einem Ende über eine Strecke langgestreckt verläuft, und dazu ausgelegt ist, dass durch eine entlang der Bedienfläche streichende Berührung ein Bedienparameter verstellt wird, wobei die Verstellung des Bedienparameters mit der Länge und der Richtung der Berührung korreliert und wobei die streichende Berührung bei ausreichender verbleibender Länge in der Bedienfläche an einem beliebigen Anfangspunkt in der Bedienfläche angesetzt werden kann.

12. Navigationsgerät nach einem der vorstehenden Ansprüche mit einem Navigationsdatenspeicher und einer Datenfernübertragungseinrichtung, das dazu ausgelegt ist, beim Verlassen eines den in dem Navigationsdatenspeicher gespeicherten Navigationsdaten entsprechenden geografischen Bereichs über die Datenfernübertragungseinrichtung Navigationsdaten zu einem anschließenden geografischen Bereich in den Navigationsdatenspeicher zu laden.

13. Verfahren zum Navigieren mit einem Navigationsgerät, das einen integrierten Telefonbuchspeicher aufweist, in dem Telefonteilnehmer mit Name, Adresse und Telefonnummer als Teilnehmereinträge gespeichert werden, wobei Daten eines Teilnehmereintrags aus dem Telefonbuchspeicher durch einen Nutzer ausgewählt und einer Navigationssoftware des Navigationsgeräts als Navigationsadressdaten zugeführt werden und die Navigationssoftware dazu ausgelegt ist, die Adresse aus dem Teilnehmereintrag zur Navigation verwendet,
**dadurch gekennzeichnet, dass** der Telefonbuchspeicher einerseits ein nach Teilnehmernamen gegliedertes Telefonbuch und andererseits ein nach Branchen gegliedertes Branchenbuch enthält.

14. Verfahren nach Anspruch 13 unter Verwerdung eines Navigationsgerätes nach einem der Ansprüche 2 bis 12.

## Claims

1. A navigation device with an integrated telephone book memory,
in which telephone participants are saved as participant entries with a name, an address and a telephone number,
wherein data of a participant entry is selectable from said telephone book memory by a user and can be fed to a navigation software of said navigation device as navigation address data, and said navigation software is designed for using said address from said participant entry for the navigation,
**characterized in that** said telephone book memory contains, on one hand, a telephone book structured by participant names and on the other hand a classified directory structured by branches.

2. The navigation device according to claim 1, which contains a telephone module, wherein said participant entries are selectable from said telephone book memory for supplying them to said telephone module and for telephone dialing.

3. The navigation device according to claim 1 or 2, which contains an e-mail-module, wherein contact data with addresses received by the e-mail-module can be supplied to said navigation software and can be used by said navigation software for said navigation.

4. The navigation device according to claim 2 and 3, in which contact data with telephone numbers received by said e-mail-module can be supplied to said telephone module and can be used for telephone dialing.

5. The navigation device according to one of the previous claims, in which said telephone book memory is implemented in a semiconductor memory.

6. The navigation device according to claim 5, in which said semiconductor memory is an exchangeable memory card.

7. The navigation device according to one of the previous claims, in which the classified directory entries can be presented according to their respective branch on map displays of said navigation software.

8. The navigation device according to one of the previous claims, in which said participant entries can, when searching in said participant entries of said telephone book memory, be presented as a list in a first area of the screen and can be scrolled, and a participant entry being arranged respectively in a specific part of said first area of said screen is displayed in a second part of said screen, outside of said list presentation, with a larger text content.

9. The navigation device according to one of the previous claims, which is designed as a vehicle-independent mobile hand device.

10. The navigation device according to one of the previous claims with a device for an input of information and a screen, which navigation device is designed for displaying address element lists with address elements on said screen for selection, if information has been entered by said information input device, which fits to a plurality of address elements, wherein said navigation device is further designed for displaying said address element lists sorted according to the size of said single address elements.

11. The navigation device according to one of the previous claims with a touch screen, which navigation device is designed for a display on said screen including an operating area, which operating area extends longitudinally between a starting point and an end point, and is designed such that an operation parameter is shifted by a touch striking along said operating area, wherein said shifting of said operation parameter correlates to the length and the direction of said touch and wherein said striking touch can be set at any starting point in said operating area, if the remaining length in said operating area is sufficient for said striking touch.

12. The navigation device according to one of the previous claims with a navigation data memory and a device for remote data transmission designed for loading navigation data of an adjacent geographic area into said navigation data memory by said device for remote data transmission, when leaving a geographic area corresponding to the navigation data saved in said navigation data memory.

13. A method for navigating with a navigation device, which has an integrated telephone book memory, in which telephone participants are saved as telephone participant entries with a name, an address and a telephone number, wherein data of a participant entry is selected from said telephone book memory by a user and is fed to a navigation software of said navigation device as navigation address data and said navigation software is designed for using said address from said participant entry for the navigation,
**characterized in that** said telephone book memory contains, on one hand, a telephone book structured by participant names and on the other hand a classified directory structured by branches.

14. The method according to claim 13 using a navigation device according to one of claims 2 to 12.

## Revendications

1. Appareil de navigation avec une mémoire de répertoire téléphonique intégrée,
dans laquelle sont enregistrés des abonnés au téléphone, avec nom, adresse et numéro de téléphone, en tant qu'entrées d'abonnés,
dans lequel les données d'une entrée d'abonné peuvent être sélectionnées par un utilisateur à partir de la mémoire de répertoire téléphonique et transmises à un logiciel de navigation de l'appareil de navigation en tant que données d'adresse de navigation, et le logiciel de navigation est conçu pour utiliser l'adresse de l'entrée d'abonné pour la navigation,
**caractérisée en ce que** la mémoire de répertoire téléphonique contient d'une part un répertoire téléphonique classé par noms d'abonnés et d'autre part un répertoire d'branches classé par secteurs de l'industrie ou du commerce.

2. Appareil de navigation selon la revendication 1, contenant un module téléphonique, dans lequel des entrées d'abonné peuvent être sélectionnées à partir de la mémoire de répertoire téléphonique, pour être transmises au module téléphonique et utilisées pour la numérotation téléphonique.

3. Appareil de navigation selon l'une des revendications 1 ou 2, contenant un module de messagerie électronique, dans lequel des données de contact avec adresses, reçues par le biais du module de messagerie électronique, peuvent être transmises au logiciel de navigation et utilisées par le logiciel de navigation pour la navigation.

4. Appareil de navigation selon l'une des revendications 2 ou 3, dans lequel les données de contact, avec numéros de téléphone, reçues par le biais du module de messagerie électronique, peuvent être transmises au module téléphonique et utilisées pour la numérotation téléphonique.

5. Appareil de navigation selon l'une des revendications précédentes, dans lequel la mémoire de répertoire téléphonique est installée dans une mémoire à semi-conducteur.

6. Appareil de navigation selon la revendication 5, dans lequel la mémoire à semi-conducteur est une carte mémoire interchangeable.

7. Appareil de navigation selon l'une des revendications précédentes, dans lequel les entrées du répertoire d'branches peuvent être représentées dépendantes aux secteurs de l'industrie ou du commerce sur des représentations cartographiques du logiciel de navigation.

8. Appareil de navigation selon l'une des revendications précédentes, dans lequel, lors de la recherche d'entrées d'abonnés de la mémoire de répertoire téléphonique, les entrées d'abonnés peuvent être représentées sous forme de liste dans une première zone de l'écran et déroulées, et dans lequel une entrée d'abonné, affichée dans une certaine partie de la première zone d'écran, est représentée en contenu du texte plus grand dans une deuxième zone d'écran, en dehors de la présentation sous forme de liste.

9. Appareil de navigation selon l'une des revendications précédentes, conçu comme un appareil portatif mobile indépendant du véhicule.

10. Appareil de navigation selon l'une des revendications précédentes, avec un dispositif pour la entrée des données et un écran, ledit appareil de navigation étant conçu pour afficher sur l'écran des listes d'éléments d'adresse, avec des éléments d'adresse au choix, lorsque des informations ont été entrés par le dispositif pour la entrée des données, qui sont assorti au plusieurs éléments d'adresse, l'appareil de navigation étant en outre conçu pour représenter les listes d'éléments d'adresse de façon triée, en fonction de la taille des différents éléments d'adresse.

11. Appareil de navigation selon l'une des revendications précédentes, avec un écran tactile, ledit appareil de navigation étant conçu pour un affichage sur écran, avec une surface de commande, ladite surface de commande s'étendant dans la longueur, sur une distance entre un début et une fin, et étant conçue pour un contact le long de la surface de commande permettant de régler les paramètres de commande, sachant que le réglage des paramètres de commande étant en corrélation avec la longueur et le direction du contact, et l'effleurement pouvant commencer en un point de départ au choix sur la surface de commande, lors d'une longueur restante suffisante sur la surface de commande.

12. Appareil de navigation selon l'une des revendications précédentes, avec une mémoire de données de navigation et un dispositif de télétransmission de données, conçu pour télécharger des données de navigation vers une zone géographique consécutive dans la mémoire de données de navigation, par le biais du dispositif de télétransmission de données, lors de la sortie d'une certaine zone géographique.

13. Procédé pour la navigation avec un appareil de navigation comportant une mémoire de répertoire téléphonique, dans laquelle sont enregistrés des abonnées au téléphone, avec nom, adresse et numéro de téléphone, en tant qu'entrées d'abonnés, dans lequel les données d'une entrée d'abonné peuvent être sélectionnées par un utilisateur à partir de la mémoire de répertoire téléphonique et transmises à un logiciel de navigation de l'appareil de navigation en tant que données d'adresse de navigation, et le logiciel de navigation est conçu pour utiliser l'adresse de l'entrée d'abonné pour la navigation,
**caractérisée en ce que** la mémoire de répertoire téléphonique contient d'une part un répertoire téléphonique classé par noms d'abonnés et d'autre part un répertoire d'branches classé par secteurs de l'industrie ou du commerce.

14. Procédé selon la revendication 13, utilisant un appareil de navigation selon l'une des revendications 2 à 12.
